# EUROPÄISCHE PATENTSCHRIFT

(11) **EP 2 123 350 B1**
(45) Veröffentlichungstag und Bekanntmachung des Hinweises auf die Patenterteilung: **29.02.2012**
(21) Anmeldenummer: 08009228.1
(22) Anmeldetag: 20.05.2008
(51) Int. Cl.: B01F 17/42, C08F 2/24

(54) **Wässrige Tensid-Zusammensetzungen mit niedrigem Pourpoint**
Aqueous tenside compounds with low pour point
Compositions de tensioactifs aqueux à point d'écoulement réduit

(43) Veröffentlichungstag der Anmeldung: 25.11.2009
(73) Patentinhaber: Cognis IP Management GmbH, 40589 Düsseldorf (DE)
(72) Erfinder: Hömberg, Katharina, 40723 Hilden (DE); Held, Uwe, 42553 Velbert (DE); Mausberg, Thomas, 42781 Haan (DE); Klagge, Ronald, 40699 Erkrath (DE); Scherer, Markus, 50733 Köln (DE)

(56) Entgegenhaltungen:
- EP-A- 0 272 574
- EP-A- 0 391 392
- EP-A- 0 570 121
- WO-A-01/29125
- DE-A1- 19 738 108
- US-A- 3 752 857
- ANONYMOUS: "Breox Product Range" SYNLUBESTECHNOLOGY COGNIS, [Online] Januar 2006 (2006-01), XP002500193 Gefunden im Internet: URL:http://www.cognis.com/NR/rdonlyres/890 93DE8-D81C-4007-9589-C0384B076EC5/0/Breox. pdf>
- FERNANDEZ A M ET AL: "New green surfactants for emulsion polymerization" PROGRESS IN ORGANIC COATINGS, XX, XX, Bd. 53, Nr. 4, 1. August 2005 (2005-08-01), Seiten 246-255, XP004945695 ISSN: 0300-9440

## Beschreibung

### Gebiet der Erfindung

Die Erfindung betrifft bei 20 °C flüssige, gießbare Tensid-Zusammensetzungen, wobei diese Zusammensetzungen einen Pourpoint unterhalb von 0 °C aufweisen und wobei diese Zusammensetzungen einen Gehalt von 10 bis 90 Gew.-% an speziellen Tensiden und 10 bis 90 Gew.-% Wasser enthalten.

### Stand der Technik

Emulgatoren spielen für die unterschiedlichsten Anwendungszwecke eine große Rolle. Ein attraktives Anwendungsgebiet für Emulgatoren ist dabei die sogenannte Emulsionspolymerisation. Üblicherweise kommen hierbei Tenside als Emulgatoren zum Einsatz.

Bei der Emulsionspolymerisation handelt es sich um ein spezielles Verfahren der Polymerisation, bei dem gering wasserlösliche Monomere mit Hilfe von Emulgatoren in Wasser emulgiert und unter Verwendung wasserlöslicher Initiatoren wie Kaliumperoxodisulfat oder Redoxinitiatoren polymerisiert werden. Anionische und/oder nichtionische Tenside sind hierbei die wesentlichen Bestandteile. Über den Mizellaufbau in der wässrigen Lösung gewährleisten sie den Prozess der Emulsionspolymerisation.

### Beschreibung der Erfindung

Der vorliegenden Erfindung lag die Aufgabe zu Grunde, wäßrige Tensid-Zusammensetzungen, insbesondere solche, die sich für den Einsatz in der Emulsionspolymerisation eignen, bereitzustellen. Diese wäßrigen Tensid-Zusammensetzungen sollten bei 20 °C gießbar bzw. pumbar sein; insbesondere sollten sie einen Pourpoint unterhalb von 0°C aufweisen, um dadurch ihre Gießbarkeit und Pumpbarkeit auch bei niedrigen Temperaturen, z.B. im Winter, zu gewährleisten. Der Pourpoint ist dabei nach der dem Fachmann bekannten Methode ASTM D 97-96a zu bestimmen. Dabei wird die Probe beginnend bei einer Temperatur von 23 °C in Intervallen von 3 °C auf ihre Gießfähigkeit geprüft. Die tiefste Temperatur, bei der die Probe nach Augenschein gerade noch fließfähig ist, wird als Pourpoint bezeichnet.

WO-A-01/29125 offenbart wässerige Zusammensetzungen, enthaltend EO-PO- Blockcopolymere. Die Zusammensetzungen haben einen erniedrigten Pour-point.

Gegenstand der Erfindung sind bei 20 °C flüssige, gießbare Tensid-Zusammensetzungen, wobei diese Zusammensetzungen einen Pourpoint unterhalb von 0 °C aufweisen und wobei diese Zusammensetzungen
(i) 10 bis 90 Gew.-% an ein oder mehreren Verbindungen, die ausgewählt sind aus der Gruppe (a) bis (b), und
(ii) 10 bis 90 Gew.-% Wasser
enthalten - Gew.-%-Angaben jeweils bezogen auf die gesamte Zusammensetzung - und wobei die Verbindungen (a) bis (b) wie folgt definiert sind:
(a) Anlagerungsprodukte von 1 bis 40 mol Ethylen- und/oder Propylenoxid pro mol an Allylalkohol,
(b) Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann,

Vorzugsweise enthalten die erfindungsgemäßen Tensid-Zusammensetzungen einen Gehalt von 50 bis 80 Gew.-% an den Verbindungen (a) bis (b) und 20 bis 50 Gew.-% Wasser. Dabei ist ein Gehalt von 60 bis 70 Gew.-% an den Verbindungen (a) bis (b) und 30 bis 40 Gew.-% Wasser ganz besonders bevorzugt.

In einer bevorzugten Ausführungsform wählt man die Verbindungen (i) aus den Verbindungen (a) und/oder (b). Vorzugsweise enthalten dann die erfindungsgemäßen Tensid-Zusammensetzungen einen Gehalt von 50 bis 80 Gew.-% an den Verbindungen (a) und/oder (b) und 20 bis 50 Gew.-% Wasser. Dabei ist ein Gehalt von 60 bis 70 Gew.-% an den Verbindungen (a) und/oder (b) und 30 bis 40 Gew.-% Wasser ganz besonders bevorzugt.

Es ist überraschend, dass die erfindungsgemäßen Tensid-Zusammensetzungen, die in den genannten bevorzugten Angebotsformen Tensid-Konzentrate darstellen, einen derart niedrigen Pourpoint aufweisen. Sie vereinigen daher mehrere Vorteile in sich: zum einen stellen sie Konzentrate dar, was für den Transport attraktiv ist, ferner sind sie gleichwohl gut handhabbar, was sich in Gießbarkeit bzw. Pumpbarkeit ausdrückt und schließlich stellt der niedrige Pourpoint einen weiteren Vorteil beim Arbeiten bei niedrigen Temperaturen dar. Überraschend ist ferner, dass die erfindungsgemäßen Tensid-Zusammensetzungen enthaltend die Verbindungen (a) und/oder (b) mit ausgezeichnetem Erfolg als Emulgatoren in der Emulsionspolymerisation einsetzbar sind, gewünschtenfalls auch in Abmischung mit ein oder mehreren Verbindungen ausgewählt aus der Gruppe (c), (d) und (e), wobei (c), (d) und (e) wie folgt definiert sind:
(c) Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Massgabe, dass die Reste R¹ und R² keine Allylreste sind,
(d) Verbindungen der Formel R³-O-X-H, wobei X ein Segment bedeutet, das aus 1 bis 40 miteinander verknüpften Ethylen- und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Massgabe, dass R³ kein Allylrest ist,
(e) Verbindungen der Formel H-O-X-H, wobei X ein Segment bedeutet, das aus 1 bis 40 miteinander verknüpften Ethylen- und/oder Propylenoxideinheiten aufgebaut ist.

Die Verbindungen (c) bis (e) enthalten jeweils ein Segment, das aus 1 bis 40 miteinander verknüpften Ethylenoxideinheiten (EO) und/oder Propylenoxideinheiten (PO) aufgebaut ist. Dieses Segment kann entweder ausschließlich EO- oder ausschließlich aus PO-Einheiten aufgebaut sein. Es ist aber auch möglich, dass es sowohl aus EO- als auch aus PO-Einheiten besteht; in diesem Falle können die EO- bzw. PO-Einheiten statistisch verteilt sein oder blockweise vorliegen. Die Synthese der Verbindungen (a) bis (e) kann nach allein dem Fachmann einschlägig bekannten Methoden erfolgen. Insbesondere gelten für die Einführung der EO/PO-Segmente die üblichen Techniken der Ethoxylierung bzw. Propoxylierung: Diese erfolgen in der Regel bei erhöhter Temperatur und erhöhtem Druck in Gegenwart von geeigneten Alkoxylierungskatalysatoren. Die Wahl des Alkoxylierungskatalysators beeinflußt dabei die sogenannte Homologenverteilung. So wird in Gegenwart der katalytisch wirkenden Alkalimetallalkoholate wie Natriumethylat eine breite Homologenverteilung erzielt, während beispielsweise in Gegenwart von Hydrotalcit als Katalysator eine stark eingeengte Homologenverteilung (sogenannte "narrow range"-Produkte) erzielt wird.

### Zu den Verbindungen (a)

Bei den Verbindungen (a) handelt es sich um Anlagerungsprodukte von 1 bis 40 mol Ethylenoxid pro mol an Allylalkohol.

### Zu den Verbindungen (b)

Bei den Verbindungen (b) handelt es sich um Anlagerungsprodukte von 1 bis 40 mol Ethylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

### Zu den Verbindungen (c)

Bei den Verbindungen (c) handelt es sich um Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind.

### Zu den Verbindungen (d)

Bei den Verbindungen (d) handelt es sich um Verbindungen der Formel R³-O-X-H, wobei X ein Segment bedeutet, das aus 1 bis 40 miteinander verknüpften Ethylen- und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Maßgabe, dass R³ kein Allylrest ist.

### Zu den Verbindungen (e)

Bei den Verbindungen (d) handelt es sich um Verbindungen der Formel H-O-X-H, wobei X ein Segment bedeutet, das aus 1 bis 40 miteinander verknüpften Ethylen- und/oder Propylenoxideinheiten aufgebaut ist.

Diese Tensidkonzentrate sind über weite Temperaturbereiche flüssig und gießbar. Insbesondere sind die Tensidkonzentrate bei 20 °C flüssig und gießbar. Die untere Grenze des Temperaturbereiches, bei dem die erfindungsgemäßen Tensidkonzentrate noch flüssig und gießbar sind, variiert mit ihrer Zusammensetzung. Prinzipiell verhält es sich so, dass die erfindungsgemäßen Tensidkonzentrate oberhalb ihrer Erstarrungspunkte und vorzugsweise bei einer Temperatur, die etwa 3 °C oberhalb ihrer Erstarrungspunkte liegt, gießbar sind. Diejenigen erfindungsgemäßen Tensid-Zusammensetzungen, die bei 20 °C Viskositätswerte nach Höppler bei 20 °C (DIN 53015) im Bereich von 0,1 bis 3 Pas aufweisen, sind besonders bevorzugt.

Die erfindungsgemäßen Tensid-Zusammensetzungen eignen sich generell zur Verwendung als Emulgatoren bei der Herstellung wässriger Latices, worunter wässrige Emulsionen oder Dispersionen von Polymeren und/oder Copolymeren verstanden werden, die üblicherweise auf dem Wege der Emulsionspolymerisation zugänglich sind. Die Natur der Polymeren und Copolymeren in diesen wäßrigen Latices unterliegt an sich keinen besonderen Beschränkungen. Besonders bevorzugt sind jedoch Polymere bzw. Copolymere auf Basis folgender Monomer-Bausteine: Acrylsäure, Acrylsäureester, Butadien, Methacrylsäure, Methacrylsäureester, Styrol, Vinylacetat und Versaticsäurevinylester. In einer bevorzugten Ausführungsform wählt man dabei die Tenside aus den Verbindungen der Klassen (a) und (b). In einer weiteren bevorzugten Ausführungsform wählt man die erfindungsgemäß einzusetzenden Tenside aussschließlich aus den Verbindungen der Klasse (a). In einer weiteren bevorzugten Ausführungsform wählt man die erfindungsgemäß einzusetzenden Tenside ausschließlich aus den Verbindungen der Klasse (b).

### Beispiele

### Eingesetzte Substanzen:

**FA-30EO**: Anlagerungsprodukt von 30 mol Ethylenoxid an einen Fettalkohol (Disponil LS 30, Fa. Cognis)
**Breox I:** Ethylenoxid-Anlagerungsprodukt an Allylalkohol (Breox AA E 450 H, Fa. Cognis)
**Breox II:** Ethylenoxid-Anlagerungsprodukt an Allylalkohol (Breox AA PE 554 H, Fa. Cognis)
**Disponil A 3065:** modifizierter ethoxylierter Fettalkohol (Fa. Cognis)

### Beispiel 1

Eine Tensidmischung wurde durch Mischen folgender Komponenten hergestellt: 35,0 g FA-30EO, 15,0 g Breox I, 50 g demineralisiertes Wasser. Der Aktivsubstanzgehalt der Mischung betrug 50 %. Der Pourpoint der Mischung betrug -2°C.

### Beispiel 2

Eine Tensidmischung wurde durch Mischen folgender Komponenten hergestellt: 45,5 g FA-30EO, 19,5 g Breox II, 35 g demineralisiertes Wasser. Der Aktivsubstanzgehalt der Mischung betrug 65 %. Der Pourpoint der Mischung betrug -3°C.

### Beispiel 3

Eine Tensidmischung wurde durch Mischen folgender Komponenten hergestellt: 42,0 g FA-30EO, 18,0 g Breox II, 40 g demineralisiertes Wasser. Der Aktivsubstanzgehalt der Mischung betrug 60 %. Der Pourpoint der Mischung betrug -9°C.

## Patentansprüche

1. Bei 20 °C flüssige, gießbare Tensid-Zusammensetzungen, wobei diese Zusammensetzungen einen Pourpoint unterhalb von 0 °C aufweisen und wobei diese Zusammensetzungen (i) 10 bis 90 Gew.-% an ein oder mehreren Verbindungen, die ausgewählt sind aus der Gruppe (a) bis (b) und (ii) 10 bis 90 Gew.-% Wasser enthalten - Gew.-%-Angaben jeweils bezogen auf die gesamte Zusammensetzung - und wobei die Verbindungen (a) bis (b) wie folgt definiert sind:
(a) Anlagerungsprodukte von 1 bis 40 mol Ethylenoxid pro mol an Allylalkohol,
(b) Anlagerungsprodukte von 1 bis 40 mol Ethylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

2. Tensidkonzentrate nach Anspruch 1, wobei diese Konzentrate einen Gehalt von 50 bis 80 Gew.-% an den Verbindungen (a) bis (b) und 20 bis 50 Gew.-% Wasser enthalten.

3. Tensidkonzentrate nach Anspruch 1, wobei diese Konzentrate einen Gehalt von 60 bis 70 Gew.-% an den Verbindungen (a) bis (b) und 30 bis 40 Gew.-% Wasser enthalten.

## Claims

1. Surfactant compositions which are pourable and liquid at 20°C, where these compositions have a pour point below 0°C and where these compositions comprise (i) 10 to 90% by weight of one or more compounds selected from the group (a) to (b) and (ii) 10 to 90% by weight of water - % by weight data in each case based on the total composition - and where the compounds (a) to (b) are defined as follows:
(a) addition products of from 1 to 40 mol of ethylene oxide per mole of allyl alcohol,
(b) addition products of from 1 to 40 mol of ethylene oxide per mole of allyl alcohol, where the OH group of these addition products is terminally capped in the sense that it is replaced by a group OR, where R is an alkyl radical having 1 to 20 carbon atoms which may be saturated or unsaturated, straight-chain or branched.

2. Surfactant concentrates according to Claim 1, where these concentrates comprise a content of from 50 to 80% by weight of the compounds (a) to (b) and 20 to 50% by weight of water.

3. Surfactant concentrates according to Claim 1, where these concentrates comprise a content of from 60 to 70% by weight of the compounds (a) to (b) and 30 to 40% by weight of water.

## Revendications

1. Compositions de tensioactifs aptes à l'écoulement, liquides à 20 °C, ces compositions de tensioactifs présentant un point d'écoulement inférieur à 0 °C et ces compositions contenant (I) 10 à 90 % en poids d'un ou plusieurs composés qui sont choisis dans les groupes (a) à (b) et (II) 10 à 90 % en poids d'eau - données en % en poids chaque fois par rapport à la composition totale - et les composés (a) à (b) étant définis comme suit :
(a) produits de fixation par addition de 1 à 40 moles d'oxyde d'éthylène par mole d'alcool allylique,
(b) produits de fixation par addition de 1 à 40 moles d'oxyde d'éthylène par mole d'alcool allylique, le groupe OH de ces produits d'addition étant coiffé par un groupe terminal dans le sens qu'il est remplacé par un groupe OR, R représentant un radical alkyle ayant de 1 à 20 atomes de carbone, qui peut être saturé ou insaturé, à chaîne droite ou ramifié,

2. Concentrés de tensioactifs selon la revendication 1, ces concentrés ayant une teneur de 50 à 80 % en poids en les composés (a) à (b) et contenant 20 à 50 % en poids d'eau.

3. Concentrés de tensioactifs selon la revendication 1, ces concentrés ayant une teneur de 60 à 70 % en poids en les composés (a) à (b) et contenant 30 à 40 % en poids d'eau.
